# EUROPEAN PATENT SPECIFICATION

(11) **EP 3 188 538 B1**
(45) Date of publication and mention of the grant of the patent: **01.05.2019**
(21) Application number: 15759305.4
(22) Date of filing: 20.01.2015
(51) Int. Cl.: H04W 28/08, H04L 5/00

(54) **METHOD AND DEVICE FOR ADJUSTING INTER-CARRIER LOAD**
VERFAHREN UND VORRICHTUNG ZUR LASTANPASSUNG ZWISCHEN TRÄGERN
PROCÉDÉ ET DISPOSITIF DE RÉGLAGE DE CHARGE INTER-PORTEUSES

(30) Priority: 25.08.2014 CN 201410421109
(43) Date of publication of application: 05.07.2017
(73) Proprietor: ZTE Corporation, Shenzhen, Guangdong 518057 (CN)
(72) Inventor: NIU, Kang, Shenzhen Guangdong 518057 (CN)
(74) Representative: Mozzi, Matteo
(86) International application number: PCT/CN2015/071146
(87) International publication number: WO 2015/131683

(56) References cited:
- WO-A1-2008/090049
- CN-A- 101 577 927
- CN-A- 102 196 498
- CN-A- 103 220 717
- US-A1- 2011 128 862
- US-A1- 2012 327 878
- US-A1- 2014 029 425
- YUANYE WANG ET AL: "Carrier load balancing and packet scheduling for multi-carrier systems", IEEE TRANSACTIONS ON WIRELESS COMMUNICATIONS, IEEE SERVICE CENTER, PISCATAWAY, NJ, US, vol. 7, no. 5, 1 May 2010 (2010-05-01), pages 1780-1789, XP011308995, ISSN: 1536-1276

## Description

### Technical Field

The disclosure relates to the technical field of Carrier Aggregation (CA) in a Long Term Evolution-Advanced (LTE-A) system, and in particular to adjust intercarrier load.

### Background

LTE-A is a subsequent evolution technology standard of Long Term Evolution (LTE) released by a 3rd Generation Partnership Project (3GPP) to meet an International Mobile Telecommunication Advanced (IMT-A) requirement made by an International Telecommunication Union (ITU). The LTE-A may maximally support a system bandwidth of 100MHz, a downlink peak rate of the LTE-A exceeds 1Gbps, and an uplink peak rate of the LTE-A reaches 500Mbps. An LTE-A system designing is not only required to meet a performance requirement but also required to consider higher backward compatibility of LTE to reduce network upgrading cost of an operating company.

In order to meet a peak rate requirement, the LTE-A maximally supports a bandwidth of 100MHz at present. However, it is very difficult to find such a great bandwidth in existing available spectrum resources, and moreover, a great bandwidth brings great difficulties to hardware designing of an evolved Node B and a User Equipment (UE). In addition, for spectrum resources scattered on multiple frequency bands, there is an urgent need of a technology for fully utilizing the scattered spectrum resources. Based on above-mentioned consideration, the LTE-A introduces a key technology, i.e. CA.

A basic method for CA is to divide a continuous spectrum or a plurality of discrete spectrums into multiple Component Carriers (CCs). The UE supporting CA may aggregate multiple CCs, and may simultaneously use Physical Resource Block (PRB) resources on all the aggregated CCs.

A Radio Load Balancing (RLB) technology adopted at present accesses or hands over a corresponding service to a carrier with a relatively lighter load to uniformly share resources between carriers as much as possible by virtue of a positional relationship between carriers in a radio network if a current access or handover target carrier has a relatively higher load and may influence system performance or system stability in an unsteady process such as service establishment or handover, thereby effectively improving the system performance and increasing system capacity by virtue of system resources.

However, the RLB technology adopted at present has a handover failure risk on one aspect, which may cause a call drop of a user and influence user experiences; and on the other aspect, signaling interactions of a system may be increased to increase a burden of the system.

US 2012/327878 A1 discloses assignment of component carriers Carrier aggregation, and assignment of component carriers.

YUANYE WANG ET AL: "Carrier load balancing and packet scheduling for multi-carrier systems" relates to resource allocation for next generation wireless communication systems with the aggregation of multiple Component Carriers (CCs).

US 2014/029425 A1 discloses method and apparatus for inter-carrier load balancing.

US 2011/128862 A1 relates to optimizing a quality of service (QoS), via load balancing, in a telecommunication system.

### Summary

The embodiments of the disclosure provide a method, device and system for adjusting intercarrier load for CA, so as at least to solve the above-mentioned problem of an existing RLB technology.

In order to achieve above-mentioned purpose, an embodiment of the disclosure discloses a method for adjusting intercarrier load for among activated Component Carriers, CCs, of a single base station which may include: acquiring Physical Resource Block, PRB, usage rate of each Component Carrier (CC), and determining a source carrier, of which a load is required to be adjusted, according to the PRB usage rate; determining unused PRBs of each activated CC, and determining a target carrier according to the unused PRBs; determining a User Equipment (UE) to be adjusted according to the source carrier and the target carrier, and determining a bearer, of which a load is required to be adjusted, according to resource information of each bearer of the UE to be adjusted; and adjusting the load of the determined bearer according to the source carrier and the target carrier.

Another embodiment of the disclosure discloses a device for adjusting intercarrier load among activated Component Carriers, CCs, of a single base station, which may include: a source carrier determination component, arranged to acquire Physical Resource Block, PRB, usage rate of each Component Carrier (CC), and determine a source carrier, of which a load is required to be adjusted, according to the PRB usage rate; a target carrier determination component, arranged to determine unused PRBs of each activated CC, and determine a target carrier according to the unused PRBs; a bearer to-be-adjusted determination component, arranged to determine a User Equipment (UE) to be adjusted according to the source carrier and the target carrier, and determine a bearer, of which a load is required to be adjusted, according to resource information of each bearer of the UE to be adjusted; and a adjustment component, arranged to adjust the load of the determined bearer according to the source carrier and the target carrier.

According to the method and device for adjusting intercarrier for CA disclosed by the disclosure, when loads of primary and secondary carriers are unbalanced and a load balancing period has yet not been reached, a service is adjusted onto a carrier with a relatively lighter load to improve network load unbalance, reduce a number of times of handover triggered by an RLB function, reduce a call drop risk and decrease a signaling interaction burden of the system.

### Brief Description of the Drawings

Fig. 1 is a flowchart of a method for adjusting intercarrier load according to an embodiment of the disclosure;
Fig. 2 is a flowchart of another method for adjusting intercarrier load according to an embodiment of the disclosure;
Fig. 3 is a flowchart of a method for implementing intercarrier load balancing according to a first example embodiment 1 or a fifth example embodiment of the disclosure;

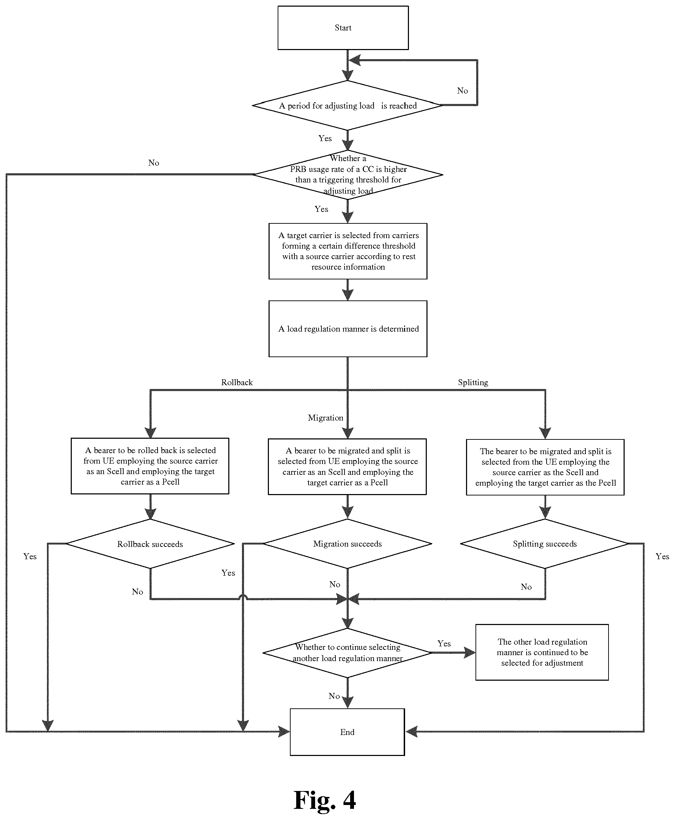

Fig. 4 is a flowchart of a method for implementing intercarrier load balancing according to a second example embodiment, a third example embodiment or a fourth example embodiment of the disclosure; and
Fig. 5 is a structural block diagram of a device for intercarrier load balancing according to an embodiment of the disclosure.

### Detailed Description

According to the solution, whether intercarrier load is required to be adjusted is judged by periodically monitoring resource information of carriers, a proper target bearer is selected to adjust a load onto a carrier with a relatively lighter load to achieve a purpose of substantial intercarrier load balancing, and activation of a secondary carrier is reduced as much as possible to achieve a purpose of saving power of an UE.

Moreover, the adjustment operation of the load may include: an operation of rollback, an operation of migration or splitting:
The operation of rollback refers to roll back a resource, scheduled on a Secondary Cell (Scell), of a certain bearer to a Primary Cell (Pcell) for scheduling when resources of the bearer of the UE are scheduled on both the Pcell and the Scell;
The operation of migration refers to completely place a resource, scheduled on a Pcell, of a certain bearer of the UE on a certain Scell for scheduling; and
The operation of splitting refers to split a resource, scheduled on a Pcell, of a certain bearer of the UE into multiple parts for scheduling on multiple Scells or multiple Scells and the Pcell.

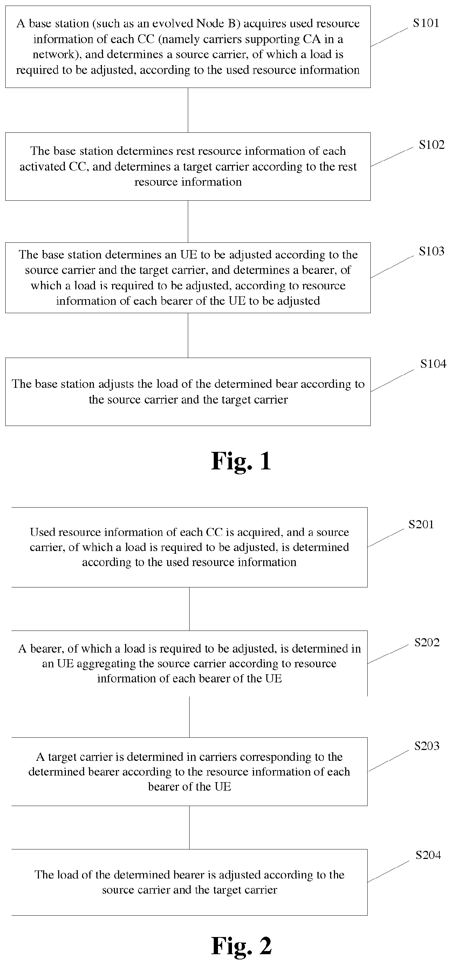

A method for adjusting intercarrier load disclosed by the solution, as shown in Fig. 1, includes the following steps:
Step S101: a base station (such as an evolved Node B) acquires used resource information of each CC (namely carriers supporting CA in a network), and determines a source carrier, of which a load is required to be adjusted, according to the used resource information;
Step S102: the base station determines rest resource information of each activated CC, and determines a target carrier according to the rest resource information;
Step S103: the base station determines an UE to be adjusted according to the source carrier and the target carrier, and determines a bearer, of which a load is required to be adjusted, according to resource information of each bearer of the UE to be adjusted; and
Step S104: the base station adjusts the load of the determined bear according to the source carrier and the target carrier.

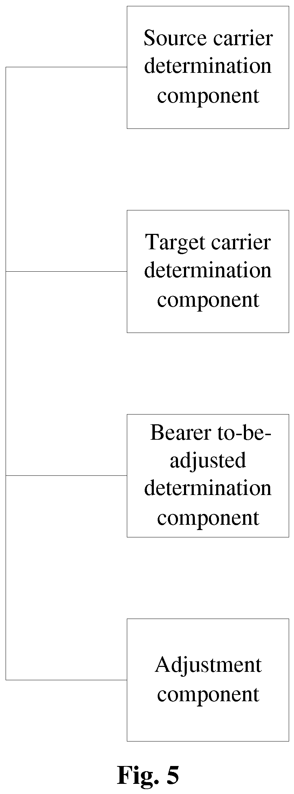

An device for adjusting intercarrier load for CA disclosed by the solution, as shown in Fig. 5, includes the following components:
a source carrier determination component, arranged to acquire used resource information of each CC, and determine a source carrier, of which a load is required to be adjusted, according to the used resource information;
a target carrier determination component, arranged to determine rest resource information of each activated CC, and determine a target carrier according to the rest resource information;
a bearer to-be-adjusted determination component, arranged to determine an UE to be adjusted according to the source carrier and the target carrier, and determine a bearer, of which a load is required to be adjusted, according to resource information of each bearer of the UE to be adjusted; and
a adjustment component, arranged to adjust the load of the determined bearer according to the source carrier and the target carrier.

The technical solution of the disclosure and achieved technical effects will be described below with reference to the drawings and specific embodiments in detail.

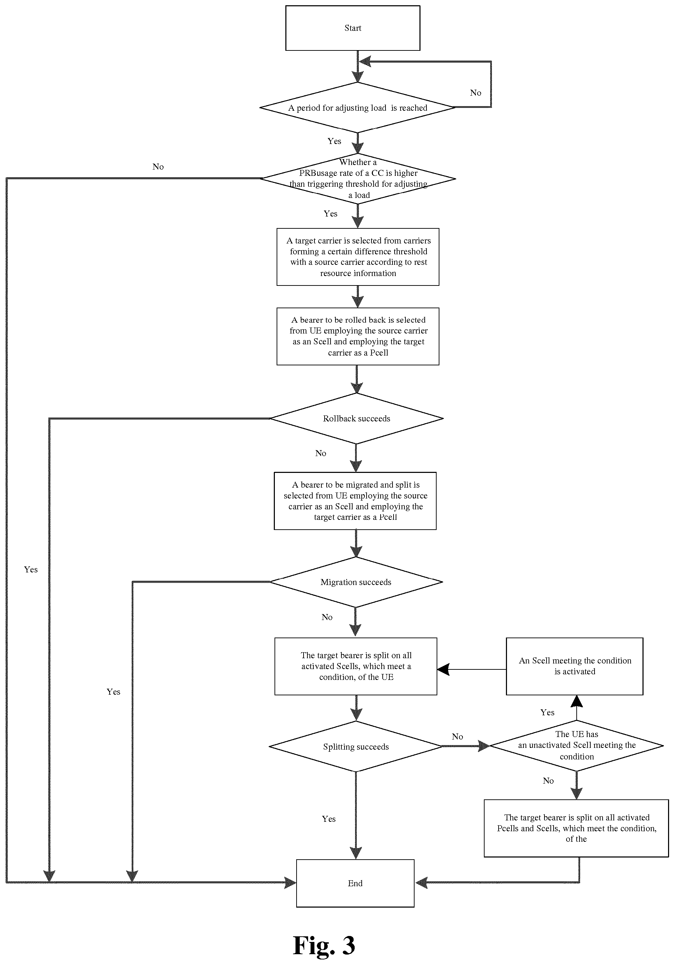

A first example embodiment, as shown in Fig. 3, specifically includes the following steps.

Step 101: an base station periodically measures PRB usage rate of each CC (namely a carrier supporting CA in a network), and performs filtering on measurement results in a time window (the time window is smaller than an RLB execution period), an operation of the filtering refers to acquire a smoothing value of a period of time, such as an arithmetical average, to obtain a filtering value. If the PRB usage rate of a certain carrier exceeds a triggering threshold for adjusting load, it is considered that a system load of the carrier is relatively higher, and the base station determines that the carrier is a source carrier, of which a load is required to be adjusted. Here, the triggering threshold for adjusting the load is lower than an RLB execution threshold, that is, a load adjustment function is triggered before the RLB is triggered, so that the load of the carrier is reduced to be lower than the RLB execution threshold before the RLB period is reached, and a number of times of handover triggered by the RLB is reduced. For example, if the RLB execution threshold is 70% and the triggering threshold for adjusting the load may be set to be 50%.

Step 102: the base station determines rest resource information on each activated CC, moreover, the rest resource information may be information such as a PRB and a speed rate, and a determination manner may be multiplying all resources of a cell by a ping-pong prevention threshold and subtracting used resources of the carriers. The ping-pong prevention threshold is set mainly to prevent repeated adjustment caused by a fact that a load of a target carrier is excessively high after a load is adjusted to the target carrier and the target carrier triggers load adjustment again. The ping-pong prevention threshold and the triggering threshold for adjusting the load may be configured into the same value, but the ping-pong prevention threshold is not allowed to be higher than the triggering threshold for adjusting the load in Step 101. Each activated CC is sequenced according to a certain principle, which is only intended to ensure that a unique sequencing result is obtained, such as a sequence from more to less rest resources or a random manner, the carrier which is lower than the load of the source carrier screened in Step 101 by a certain difference threshold and has most rest resources is selected from a sequenced queue as the target carrier The difference threshold is intended to ensure that the target carrier for load adjustment is lower than the source carrier in load, that is, a higher load is adjusted to a lower load, and the difference threshold may, for example, be valued to be 10%, 15% or 20%.

Step 103: the base station selects a target UE from the UE employing the source carrier as an Scell and employing the target source as a Pcell according to a certain principle (for example, the UE with a highest PRB usage rate on the source carrier is selected), selects a certain bearer of the target UE as a bearer to be rolled back (for example, a bearer, occupying most PRB/speed rate resources on the source carrier, of the UE, is selected), enters Step 104, and if the bearer to be rolled back may not be selected, enters Step 105.

Step 104: the base station executes a rollback operation and ends a flow if judging that the resources occupied by the bearer to be rolled back on the source carrier are less than or equal to rest resources of the target carrier, otherwise enters Step 105.

Step 105: the base station selects an target UE from the UE employing the source carrier as a Pcell and employing the target source as an Scell according to a certain principle (for example, the UE with a highest PRB usage rate on the source carrier is selected), selects a certain bearer of the target UE as a bearer to be migrated and split (for example, a bearer, occupying most PRB/speed rate resources on the source carrier, of the UE, is selected), and enters Step 106.

Step 106: the base station executes a migration operation and ends the flow if resources occupied by the bearer to be migrated and split are less than or equal to the rest resources of the target carrier, otherwise enters Step 107.

Step 107: the base station performs a splitting operation on the bearer to be migrated and split in all activated Scells where the target UE selected in Step 105 is located (for example, resource splitting is performed on each Scell according to a sequence from more to less rest resources). In case of a splitting failure, splitting is performed after one or more carriers are activated in an unactivated Scell of the target UE, and the flow is ended after succeeding. In case of a failure after all unactivated Scells of the UE are traversed, splitting is performed after addition of the Pcell, and the flow is ended.

The steps are described according to a sequence of rollback→migration→splitting, and it is an optimal processing manner. But the adjustment solution is not limited to the above sequence, and also supports another optional manner of, for example, only performing rollback and directly performing splitting. Here, selection of the adjustment manner may be controlled by a switch, and may be implemented in an array manner. The rollback manner may be selected to activate less the Scells as much as possible to achieve a purpose of saving power of the UE. Performing migration at first may reduce resource scheduling fragments, resources of the same bearer are scheduled on the same carrier as much as possible, and the splitting is performed when the resources are not enough to migrate.

A second example embodiment specifically includes the following steps.

A period for adjusting intercarrier load for CA is 10s, a triggering threshold for adjusting load is 60%, an RLB period is 20s, a triggering threshold for balancing load is 70%, an intercarrier difference threshold is 20%, a ping-pong prevention threshold is 60%, and bandwidths of three CCs Cell1, Cell2 and Cell3 are all 20M. It is supposed that spectrum efficiency of the cells does not change.

Step 201: when a measurement time window is reached (at the 10th s), an base station makes statistics to obtain that a PRB usage rate of Cell1 is 65%, a PRB usage rate of Cell2 is 40% and a PRB usage rate of Cell3 is 45%. Since the PRB usage rate of Cell1 exceeds the triggering threshold for adjusting the load and the RLB execution period is not reached, Cell1 is determined as a source carrier, and a load adjustment function is required to be triggered.

Step 202: numbers of rest PRB resources, counted by the base station, of Cell2 and Cell3 are Cell2rest=100*60%-100*40%=20 and Cell3rest=100*60%-100*45%=15. Since the PRB usage rates of Cell2 and Cell3 are both lower than Cell1 by the difference threshold (20%) but the rest resources of Cell2 are more than Cell3, Cell2 is determined as a target carrier.

Step 203: three UEs UE1, UE2 and UE3 are all RIO UE supporting CA, moreover Radio Resource Control (RRC) of UE1 is connected to Cell1, and no other carriers are aggregated; RRC of UE2 is connected to Cell2, and aggregated carriers are Cell1, Cell2 and Cell3; RRC of UE3 is connected to Cell3, and no other carriers are aggregated; and resource occupation conditions of each piece of UE are as follows:
bearer1 of UE1 occupies 50 Resource Blocks (RBs) on Cell1;
bearer1 of UE2 occupies 15 RBs on Cell1, and occupies 40 RBs on Cell2; and
bearer1 of UE3 occupies 45 RBs on Cell3.

Since UE employing the source carrier Cell1 as an Scell and employing the target carrier Cell2 as a Pcell only includes UE2, bearer1 of UE2 is selected as a bearer to be rolled back.

Step 204: the base station judges a relationship between resources occupied by the bearer to be rolled back on the source carrier Cell1 and rest resources of the target carrier Cell2: 15 RBs<20 RBs, and determines that rollback may be performed. After rollback is executed, the PRB usage rate of Cell1 is 50%, the PRB usage rate of Cell2 is 55%, the PRB usage rate of Cell3 is 45%, and they are substantially balanced. Moreover, there are no resources scheduled by UE2 on Cell1, so that Cell1 may be deactivated to achieve a purpose of saving power of UE2 after rollback.

In addition, before the RLB execution period is reached (at the 20th s), if there is an UE accessing Cell1 for a service and required to occupy resources of 8 RBs and intercarrier load adjustment is not performed, a cell load of Cell1 may reach 65%+8%=73% and exceed the RLB execution threshold 70% at a moment when the RLB execution period is reached, and RLB-based handover may be executed; and if an operation of adjusting intercarrier load is performed in advance, the cell load of Cell1 is 50%+8%=58% and is lower than the RLB execution threshold 70% at the moment when the RLB execution period is reached, and RLB-based handover may not be executed. Therefore, a number of times of RLB handover is reduced, and a call drop risk is reduced.

A third example embodiment specifically includes the following steps.

A period for adjusting intercarrier load for CA is 10s, and a triggering threshold for adjusting load is 60%, an RLB period is 20s, a triggering threshold for balancing load is 70%, an intercarrier difference threshold is 20%, a ping-pong prevention threshold is 60%, and bandwidths of three CCs Cell1, Cell2 and Cell3 are all 20M. It is supposed that spectrum efficiency of each cell is the same and does not change.

Step 301: when a measurement time window is reached (at the 10th s), a base station makes statistics to obtain that a PRB usage rate of Cell1 is 65%, a PRB usage rate of Cell2 is 40% and a PRB usage rate of Cell3 is 45%. Since the PRB usage rate of Cell1 exceeds the triggering threshold for adjusting the load and the RLB execution period is not reached, Cell1 triggers a load adjustment function.

Step 302: numbers of rest PRB resources, counted by the base station, of Cell2 and Cell3 are Cell2rest=100*60%-100*40%=20 and Cell3rest=100*60%-100*45%=15. Since the PRB usage rates of Cell2 and Cell3 are both lower than Cell1 by the difference threshold (20%) but rest resources of Cell2 are more than Cell3, Cell2 is determined as a target carrier.

Step 303: UE1, UE2, UE3 in four UEs are all R10 UE supporting CA, and UE4 is R8 UE, wherein RRC of UE1 is connected to Cell1, and aggregated carriers are Cell1, Cell2 and Cell3; RRC of UE2 is connected to Cell2, and no other carriers are aggregated; RRC of UE3 is connected to Cell3, and no other carriers are aggregated; and UE4 accesses Cell1. Resource occupation conditions of each UE are as follows:
bearer1 of UE1 occupies 15 RBs on Cell1;
bearer2 of UE1 occupies 10 RBs on Cell1;
bearer1 of UE2 occupies 40 RBs on Cell2;
bearer1 of UE3 occupies 45 RBs on Cell3; and
bearer1 of UE4 occupies 40 RBs on Cell1.

Since an UE employing the source carrier Cell1 as a Pcell and employing the target carrier Cell2 as an Scell only includes UE1 and the 15 RBs occupied by bearer1 of UE1 on Cell1 are more than the 10 RBs occupied by bearer2 on Cell1, bearer1 of UE1 is selected as a bearer to be migrated and split.

Step 304: a relationship between resources occupied by the bearer to be migrated and split on Cell1 and the rest resources of Cell2 is judged to be: 15 RBs<20 RBs, so that migration is directly performed. After migration, the PRB usage rate of Cell1 is 50%, the PRB usage rate of Cell2 is 55%, the PRB usage rate of Cell3 is 45%, and they are substantially balanced.

In addition, before the RLB execution period is reached (at the 20th s), if there is an UE accessing Cell1 for a service and required to occupy resources of 8 RBs and intercarrier load adjustment is not performed, a cell load of Cell1 may reach 65%+8%=73% and exceed the RLB execution threshold 70% at a moment when the RLB execution period is reached, and RLB-based handover may be executed; and if the operation of adjusting the intercarrier load is performed in advance, the cell load of Cell1 is 50%+8%=58% and is lower than the RLB execution threshold 70% at the moment when the RLB execution period is reached, and RLB-based handover may not be executed. Therefore, a number of times of RLB handover is reduced, and a call drop risk is reduced.

A fourth example embodiment specifically includes the following steps.

A period for adjusting intercarrier load for CA is 10s, and a triggering threshold for adjusting load is 60%, an RLB period is 20s, a triggering threshold for balancing load is 70%; an intercarrier difference threshold is 20%, a ping-pong prevention threshold is 60%, and bandwidths of three CCs Cell1, Cell2 and Cell3 are all 20M. It is supposed that spectrum efficiency of each cell is the same and does not change.

Step 401: when a measurement time window is reached (at the 10th s), a base station makes statistics to obtain that a PRB usage rate of Cell1 is 65%, a PRB usage rate of Cell2 is 40% and a PRB usage rate of Cell3 is 45%. Since the PRB usage rate of Cell1 exceeds the triggering threshold for adjusting the load and the RLB execution period is not reached, Cell1 triggers a load adjustment function.

Step 402: numbers of rest PRB resources, counted by the base station, of Cell2 and Cell3 are Cell2rest=100*60%-100*40%=20 and Cell3rest=100*60%-100*45%=15. Since the PRB usage rates of Cell2 and Cell3 are both lower than Cell1 by the difference threshold (20%) but the rest resources of Cell2 are more than Cell3, Cell2 is determined as a target carrier.

Step 403: four UEs UE1, UE2, UE3 and UE4 are all R10 UE supporting CA, moreover RRC of UE1 is connected to Cell1, and aggregated carriers are Cell1, Cell2 and Cell3; RRC of UE2 is connected to Cell2, and no other carriers are aggregated; RRC of UE3 is connected to Cell3, and no other carriers are aggregated; and RRC of UE4 is connected to Cell1, and no other carriers are aggregated. Resource occupation conditions of each UE are as follows:
bearer1 of UE1 occupies 22 RBs on Cell1;
bearer2 of UE1 occupies 3 RBs on Cell1;
bearer1 of UE2 occupies 40 RBs on Cell2;
bearer1 of UE3 occupies 45 RBs on Cell3; and
bearer1 of UE4 occupies 40 RBs on Cell1.

Since an UE employing the source carrier Cell1 as a Pcell and employing the target carrier Cell2 as an Scell only includes UE1 and the 22 RBs occupied by bearer1 of UE1 on Cell1 are more than the 3 RBs occupied by bearer2 on Cell1, bearer1 of UE1 is selected as a bearer to be migrated and split.

Step 404: a relationship between resources occupied by the bearer to be migrated and split on Cell1 and the rest resources of Cell2 is judged to be: 22 RBs<20 RBs, so that migration may not be performed, and splitting is required to be performed.

Furthermore, resources split by the split bearer on Cell2 are 20 RBs, the resources of the rest 2 RBs are split on another carrier aggregated by UE1, the carrier Cell3, except Cell2, with most rest resources is selected as a secondary splitting carrier according to Step 402, and a relationship between the resources to be split and the rest resources of Cell3 is compared to be: 2 RBs<15 RBs, so that splitting may be performed. After splitting, the PRB usage rate of Cell1 is 43%, the PRB usage rate of Cell2 is 60%, the PRB usage rate of Cell3 is 47%, and they are substantially balanced.

In addition, before the RLB execution period is reached (at the 20th s), if there is an UE accessing Cell1 for a service and required to occupy resources of 8 RBs and intercarrier load adjustment is not performed, a cell load of Cell1 may reach 65%+8%=73% and exceed the RLB execution threshold 70% at a moment when the RLB execution period is reached, RLB-based handover may be executed, and there may be a handover failure and even call drop risk; and if the operation of adjusting the intercarrier load is performed in advance, the cell load of Cell1 is 43%+8%=51% and is lower than the RLB execution threshold 70% at the moment when the RLB execution period is reached, and RLB-based handover may not be executed. Therefore, a number of times of RLB handover is reduced, and a call drop risk is reduced.

A fifth example embodiment specifically includes the following steps.

A period for adjusting intercarrier load for CA is 10s, and a triggering threshold for adjusting load is 60%, an RLB period is 20s, a triggering threshold for balancing load is 70%; an intercarrier difference threshold is 20%, a ping-pong prevention threshold is 60%, and bandwidths of three CCs Cell1, Cell2 and Cell3 are all 20M. It is supposed that spectrum efficiency of each cell is the same and does not change.

Step 501: when a measurement time window is reached (at the 10th s), a base station makes statistics to obtain that a PRB usage rate of Cell1 is 65%, a PRB usage rate of Cell2 is 40% and a PRB usage rate of Cell3 is 45%. Since the PRB usage rate of Cell1 exceeds the triggering threshold for adjusting the load and the RLB execution period is not reached, Cell1 triggers a load adjustment function, and is determined as a source carrier.

Step 502: numbers of rest PRB resources, counted by the base station, of Cell2 and Cell3 are Cell2rest=100*60%-100*40%=20 and Cell3rest=100*60%-100*45%=15. Since the PRB usage rates of Cell2 and Cell3 are both lower than Cell1 by the difference threshold (20%) but the rest resources of Cell2 are more than Cell3, Cell2 is determined as a target carrier.

Step 503: four UEs UE1, UE2, UE3 and UE4 are all RIO UE supporting CA, morevoer RRC of UE1 is connected to Cell1, and aggregated carriers are Cell1, Cell2 and Cell3; RRC of UE2 is connected to Cell2, and aggregated carriers are Cell1, Cell2 and Cell3; RRC of UE3 is connected to Cell3, and no other carriers are aggregated; and RRC of UE4 is connected to Cell1, and no other carriers are aggregated. Resource occupation conditions of each UE are as follows:
bearer1 of UE1 occupies 22 RBs on Cell1;
bearer2 of UE1 occupies 3 RBs on Cell1;
bearer1 of UE2 occupies 25 RBs on Cell2;
bearer2 of UE2 occupies 40 RBs on Cell2;
bearer1 of UE3 occupies 45 RBs on Cell3; and
bearer1 of UE4 occupies 15 RBs on Cell1.

Since an UE employing the source carrier Cell1 as an Scell and employing the target carrier Cell2 as a Pcell only includes UE2, bearer1 of UE2 is selected as a bearer to be rolled back.

Step 504: a relationship between resources occupied by the bearer to be rolled back on Cell1 and the rest resources of Cell2 is judged to be: 25 RBs>20 RBs, so that rollback may not be performed, and Step 505 is executed.

Step 505: since UE employing the source carrier Cell1 as a Pcell and employing the target carrier Cell2 as an Scell only includes UE1 and the 22 RBs occupied by bearer1 of UE1 on Cell1 are more than the 3 RBs occupied by bearer2 on Cell1, bearer1 of UE1 is selected as a bearer to be migrated and split, and Step 506 is executed.

Step 506: a relationship between resources occupied by the bearer to be migrated and split on Cell1 and the rest resources of Cell2 is judged to be: 22 RBs>20 RBs, so that migration may not be performed, splitting is required to be performed on the bearer, and Step 507 is executed.

Step 507: resources split by the split bearer on Cell2 are resources of the rest 20 RBs of Cell2, the rest 2 RBs are split on another carrier aggregated by UE1, the carrier Cell3, except Cell2, with most rest resources is selected as a secondary splitting carrier according to Step 502, and a relationship between the split rest resources and the rest resources of Cell3 is compared to be: 2 RBs<15 RBs, so that splitting succeeds. After splitting, the PRB usage rate of Cell1 is 43%, the PRB usage rate of Cell2 is 60%, the PRB usage rate of Cell3 is 47%, and they are substantially balanced.

In addition, before the RLB execution period is reached (at the 20th s), if there is an UE accessing Cell1 for a service and required to occupy resources of 8 RBs and intercarrier load adjustment is not performed, a cell load of Cell1 may reach 65%+8%=73% and exceed the RLB execution threshold 70% at a moment when the RLB execution period is reached, RLB-based handover may be executed, and there may be a handover failure and even call drop risk; and if the operation of adjusting the intercarrier load is performed in advance, the cell load of Cell1 is 43%+8%=51% and is lower than the RLB execution threshold 70% at the moment when the RLB execution period is reached, and RLB-based handover may not be executed. Therefore, a number of times of RLB handover is reduced, and a call drop risk is reduced.

A sixth example embodiment, as shown in Fig. 2, specifically includes the following steps.

A method for adjusting intercarrier load includes the following steps:
used resource information of each CC is acquired, and a source carrier, of which a load is required to be adjusted, is determined according to the used resource information;
a bearer, of which a load is required to be adjusted, is determined in an UE aggregating the source carrier according to resource information of each bearer of the UE;
a target carrier is determined in carriers corresponding to the determined bearer according to the resource information of each bearer of the UE; and
the load of the determined bearer is adjusted according to the source carrier and the target carrier.

A seventh example embodiment is a device for adjusting intercarrier load for CA, which includes the following components:
a source carrier determination component, arranged to acquire used resource information of each CC, and determine a source carrier, of which a load is required to be adjusted, according to the used resource information;
a target carrier determination component, arranged to determine rest resource information of each activated CC, and determine a target carrier according to the rest resource information;
a bearer to-be-adjusted determination component, arranged to determine an UE to be adjusted according to the source carrier and the target carrier, and determine a bearer, of which a load is required to be adjusted, according to resource information of each bearer of the UE to be adjusted; and
a adjustment component, arranged to adjust the load of the determined bearer according to the source carrier and the target carrier.

An eighth example embodiment is a system for adjusting intercarrier load for CA, which includes the above-mentioned device for adjusting the load.

From the descriptions about specific implementation modes, a technical means adopted to achieve a preset purpose and effects of the disclosure may be known more deeply and specifically, but the drawings are only adopted to provide references and descriptions and not intended to limit the disclosure. In addition, the embodiments and characteristics in the embodiments may be combined under the condition of no conflicts.

Those skilled in the art should know that the embodiments of the disclosure may be provided as a method or a computer program product. Therefore, the disclosure may adopt a form of hardware embodiment, software embodiment and combined software and hardware embodiment. Moreover, the disclosure may adopt a form of computer program product implemented on one or more computer-available storage media (including, but not limited to, a disk memory and an optical memory) including computer-available program codes.

The disclosure is described with reference to at least one of flowcharts and block diagrams of the method and computer program product according to the embodiments of the disclosure. It should be understood that at least one of flow and block in the at least one of flowcharts and the block diagrams and combinations of at least one of the flows and blocks in at least one of the flowcharts and the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in at least one of the flowcharts and one or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in at least one of the flowcharts and one or more blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in at least one of the flowcharts and one or more blocks in the block diagrams are provided by the instructions executed on the computer or the other programmable data processing equipment.

The above is only the example embodiments of the disclosure and not intended to limit the scope of protection of the disclosure.

### Industrial Applicability

From the above, the method, device and system for adjusting intercarrier load for CA provided by the embodiments of the disclosure have the following beneficial effects: when loads of primary and secondary carriers are unbalanced and a load balancing period has yet not been reached, a service is adjusted onto a carrier with a relatively lighter load to improve network load unbalance, reduce a number of times of handover triggered by an RLB function, reduce a call drop risk and decrease a signaling interaction burden of the system.

## Claims

1. A method for adjusting intercarrier load among activated Component Carriers, CCs, of a single base station, comprising:
acquiring Physical Resource Block, PRB, usage rate of each CC, and determining a source carrier, of which a load is required to be adjusted, according to the PRB usage rate (S101);
determining unused PRBs of each activated CC, and determining a target carrier according to the unused PRBs (S102);
determining a User Equipment, UE, to be adjusted according to the source carrier and the target carrier, and determining a bearer, of which a load is required to be adjusted, according to resource information of each bearer of the UE to be adjusted (S103); and
adjusting the load of the determined bearer according to the source carrier and the target carrier (S104).

2. The method as claimed in claim 1, wherein the resource information of each bearer of the UE is the PRB usage rate of each CC.

3. The method as claimed in claim 1, wherein acquiring the PRB usage rate of each CC and determining the source carrier, of which the load is required to be adjusted, according to the PRB usage rate (S101) comprises:
periodically measuring the PRB usage rate of each CC to obtain a measurement result, wherein a measurement period for periodically measuring the PRB usage rate of each CC is smaller than a Radio Load Balancing, RLB, period;
filtering the measurement result to obtain a filtering value, wherein filtering operation performing on the measurement result is to calculate a smoothing value or an average;
comparing the filtering value with a triggering threshold for adjusting a load, wherein the triggering threshold for adjusting the load is lower than an RLB execution threshold; and
when the filtering value is higher than the triggering threshold, determining that one carrier is the source carrier, of which the load is required to be adjusted.

4. The method as claimed in claim 1, wherein determining the unused PRBs of each activated CC (S102) is multiplying available resources of each activated CC by a ping-pong prevention threshold and subtracting used resources, wherein the ping-pong prevention threshold is lower than or equal to the triggering threshold for adjusting the load.

5. The method as claimed in claim 1, wherein determining the target carrier according to the unused PRBs (S102) is executed by sequencing each activated CC to obtain a sequenced queue according to the unused PRBs and screening the target carrier from the sequenced queue, wherein sequencing each activated CC according to the unused PRBs is executed by performing sequencing from more to less unused PRBs or in a random manner, and screening the target carrier from the sequenced queue is executed by determining a carrier lower than a load of the source carrier by a certain difference threshold and with most rest resources as the target carrier, wherein the difference threshold is 10%-20%.

6. The method as claimed in claim 1, wherein determining the UE to be adjusted according to the source carrier and the target carrier (S103) comprises: determining an UE employing the source carrier as a Secondary Cell, Scell, and employing the target carrier as a Primary Cell, Pcell, as an UE to be rolled back; and determining an UE employing the source carrier as a Pcell and employing the target carrier as an Scell as an UE to be migrated and split.

7. The method as claimed in claim 6, wherein determining the bearer, of which the load is required to be adjusted, according to the resource information of each bearer of the UE to be adjusted (S103) comprises: screening a bearer which occupies most resources on the source carrier from the determined UE to be rolled back and the UE to be migrated and split as the bearer, of which the load is required to be adjusted.

8. The method as claimed in claim 7, wherein adjusting the load of the determined bearer according to the source carrier and the target carrier (S104) comprises: when the bearer, of which the load is required to be adjusted, is a bearer to be rolled back,
performing rollback on the bearer to be rolled back, wherein rollback is rolling back a resource, scheduled on the Scell, of the bearer to the Pcell for scheduling.

9. The method as claimed in claim 7, wherein adjusting the load of the determined bearer according to the source carrier and the target carrier (S104) comprises: when the bearer, of which the load is required to be adjusted, is a bearer to be migrated and split,
performing migration on the bearer to be migrated and split at first and performing splitting in case of a migration failure, wherein the migration is completely placing the resource, scheduled on the Pcell, of the bearer on the Scell for scheduling; or,
performing splitting on the bearer to be migrated and split.

10. The method as claimed in claim 7, wherein adjusting the load of the determined bearer according to the source carrier and the target carrier (S104) comprises: when the bearer, of which the load is required to be adjusted, includes both a bearer to be rolled back and a bearer to be migrated and split,
performing rollback on the bearer to be rolled back, and performing migration and splitting in case of a rollback failure, wherein rollback is rolling back a resource, scheduled on the Scell, of the bearer to the Pcell for scheduling, and the migration is completely placing the resource, scheduled on the Pcell, of the bearer on the Scell for scheduling.

11. The method as claimed in claim 8, wherein before performing rollback on the bearer to be rolled back, used resources of the bearer to be rolled back on the source carrier are compared with the rest resources of the target carrier, and when the used resources of the source carrier are less than or equal to the rest resources of the target carrier, rollback is performed; otherwise the rollback is not performed.

12. The method as claimed in claim 8, wherein after rollback is performed on the bearer to be rolled back, the Scell aggregated with the bearer and serving as the source carrier is deactivated.

13. The method as claimed in claim 12, wherein used resources of the bearer to be migrated and split on the source carrier are compared with the rest resources of the target carrier before migration, and migration or splitting is determined to be performed according to a comparison result, wherein migration or splitting is determined to be performed according to the comparison result in a following manner: performing migration when the used resources of the bearer to be migrated and split on the source carrier are less than or equal to the rest resources of the target carrier; otherwise performing splitting.

14. The method as claimed in claim 9, wherein
the splitting is the resource, scheduled on the Pcell, of the bearer on the activated Scell for scheduling;
or the splitting is, when a rest resources sum of all activated Scells is less than the used resources of the Pcell, activating an Scell and splitting the resource, scheduled on the Pcell, of the bearer on the Scell before activation and after activation;
or the splitting is, when a rest resource sum of all Scells is less than the used resources of the Pcell aggregated by the determined bearer after all the Scells aggregated by the determined bearer are activated, scheduling resources, which may not be scheduled on the Scells, on the Pcell.

15. A device for adjusting intercarrier load among activated Component Carriers, CCs, of a single base station, comprising:
a source carrier determination component, arranged to acquire Physical Resource Block, PRB, usage rate of each CC, and determine a source carrier, of which a load is required to be adjusted, according to the PRB usage rate;
a target carrier determination component, arranged to determine unused PRBs of each activated CC, and determine a target carrier according to the unused PRBs;
a bearer to-be-adjusted determination component, arranged to determine a User Equipment, UE, to be adjusted according to the source carrier and the target carrier, and determine a bearer, of which a load is required to be adjusted, according to resource information of each bearer of the UE to be adjusted; and
a adjustment component, arranged to adjust the load of the determined bearer according to the source carrier and the target carrier.

## Patentansprüche

1. Verfahren zur Lastanpassung zwischen Trägern zwischen aktivierten Komponententrägern (Component Carrier, CC) einer einzelnen Basisstation, umfassend:
Erfassen der Nutzungsrate des physischen Ressourcenblocks (Physical Resource Block, PRB) jedes CC und Bestimmen eines Quellenträgers, dessen Last gemäß der PRB-Nutzungsrate angepasst werden muss (S101);
Bestimmen nicht verwendeter PRB jedes aktivierten CC und Bestimmen eines Zielträgers gemäß den nicht verwendeten PRB (S102);
Bestimmen eines Benutzergeräts (User Equipment, UE), das gemäß dem Quellenträger und dem Zielträger anzupassen ist, und Bestimmen eines Trägers, dessen Last gemäß Ressourceninformationen jedes Trägers des anzupassenden UE angepasst werden muss (S103); und
Anpassen der Last des bestimmten Trägers gemäß dem Quellenträger und dem Zielträger (S104).

2. Verfahren nach Anspruch 1, wobei die Ressourceninformationen jedes Trägers des UE die PRB-Nutzungsrate jedes CC ist.

3. Verfahren nach Anspruch 1, wobei das Erfassen der PRB-Nutzungsrate jedes CC und das Bestimmen des Quellenträgers, dessen Last angepasst werden muss, gemäß der PRB-Nutzungsrate (S101) umfasst:
periodisches Messen der PRB-Nutzungsrate jedes CC, um ein Messergebnis zu erhalten, wobei eine Messperiode des periodischen Messens der PRB-Nutzungsrate jedes CC kürzer ist als eine Funklastenausgleichs(Radio Load Balancing, RLB)-Periode;
Filtern des Messergebnisses, um einen Filterwert zu erhalten, wobei durch die Durchführung des Filtervorgangs am Messergebnis ein Glättungswert oder ein Mittelwert berechnet werden soll;
Vergleichen des Filterwerts mit einem Auslöseschwellenwert zum Anpassen einer Last, wobei der Auslöseschwellenwert zum Anpassen der Last niedriger als ein RLB-Ausführungsschwellenwert ist; und
wenn der Filterwert höher als der Auslöseschwellenwert ist, Bestimmen, dass ein Träger der Quellenträger ist, dessen Last angepasst werden muss.

4. Verfahren nach Anspruch 1, wobei das Bestimmen der nicht verwendeten PRB jedes aktivierten CC (S102) das Multiplizieren verfügbarer Ressourcen jedes aktivierten CC mit einem Ping-Pong-Verhinderungsschwellenwert und das Subtrahieren verwendeter Ressourcen ist, wobei der Ping-Pong-Verhinderungsschwellenwert niedriger als der oder gleich dem Auslöseschwellenwert zum Anpassen der Last ist.

5. Verfahren nach Anspruch 1, wobei das Bestimmen des Zielträgers gemäß den nicht verwendeten PRB (S102) durch Sequenzieren jedes aktivierten CC, um eine sequenzierte Warteschlange gemäß den nicht verwendeten PRB zu erhalten, und Screenen des Zielträgers in der sequenzierten Warteschlange ausgeführt wird, wobei das Sequenzieren jedes aktivierten CC gemäß den nicht verwendeten PRB durch Durchführen einer Sequenzierung von mehr zu weniger nicht verwendeten PRB oder auf zufällige Weise ausgeführt wird und das Screenen des Zielträgers in der sequenzierten Warteschlange durch Bestimmen eines Trägers ausgeführt wird, der um einen bestimmten Differenzschwellenwert niedriger als eine Last des Quellenträgers ist und als der Zielträger die meisten Restressourcen aufweist, wobei der Differenzschwellenwert 10 % bis 20 % beträgt.

6. Verfahren nach Anspruch 1, wobei das Bestimmen des UE, das gemäß dem Quellenträger und dem Zielträger anzupassen ist (S103), umfasst: Bestimmen eines UE, das den Quellenträger als eine Sekundärzelle (Secondary Cell, Scell) verwendet und den Zielträger als eine Primärzelle (Primary Cell, Pcell) verwendet, als ein zurückzusetzendes UE; und Bestimmen eines UE, das den Quellenträger als Pcell verwendet und das den Zielträgers als Scell verwendet, als ein zu migrierendes und aufzuteilendes UE.

7. Verfahren nach Anspruch 6, wobei das Bestimmen eines Trägers, dessen Last gemäß Ressourceninformationen jedes Trägers des anzupassenden UE angepasst werden muss (S103) umfasst: Screenen eines Trägers, der die meisten Ressourcen auf dem Quellenträger von dem als zurückzusetzend bestimmten UE und dem zu migrierenden und aufzuteilenden UE besetzt, als den Träger, dessen Last angepasst werden muss.

8. Verfahren nach Anspruch 7, wobei das Anpassen der Last des bestimmten Trägers gemäß dem Quellenträger und dem Zielträger (S104) umfasst: wenn der Träger, dessen Last angepasst werden muss, ein zurückzusetzender Träger ist,
Durchführen eines Zurücksetzens an dem zurückzusetzenden Träger, wobei das Zurücksetzen das Zurücksetzen einer auf der Scell geplanten Ressource des Trägers auf die Pcell zur Planung ist.

9. Verfahren nach Anspruch 7, wobei das Anpassen der Last des bestimmten Trägers gemäß dem Quellenträger und dem Zielträger (S104) umfasst: wenn der Träger, dessen Last angepasst werden muss, ein zu migrierender und aufzuteilender Träger ist,
erst Durchführen einer Migration auf dem zu migrierenden und aufzuteilenden Träger und Durchführen einer Aufteilung im Falle eines Migrationsversagens, wobei die Migration darin besteht, die auf der Pcell geplante Ressource des Trägers vollständig auf der Scell für die Planung zu platzieren; oder,
Durchführen der Aufteilung auf dem zu migrierenden und aufzuteilenden Träger.

10. Verfahren nach Anspruch 7, wobei das Anpassen der Last des bestimmten Trägers gemäß dem Quellenträger und dem Zielträger (S104) umfasst: wenn der Träger, dessen Last angepasst werden muss, sowohl einen zurückzusetzenden Träger als auch einen zu migrierenden und aufzuteilenden Träger enthält,
Durchführen eines Zurücksetzens auf dem zurückzusetzenden Träger und Durchführen von Migration und Aufteilen im Falle Zurücksetzversagens, wobei das Zurücksetzen das Zurücksetzen einer auf der Scell geplanten Ressource des Trägers auf die Pcell zur Planung ist und die Migration darin besteht, die auf der Pcell geplante Ressource des Trägers vollständig auf der Scell für die Planung zu platzieren.

11. Verfahren nach Anspruch 8, wobei verwendete Ressourcen des auf dem zurückzusetzenden Trägers auf dem Quellenträger vor dem Durchführen des Zurücksetzens des zurückzusetzenden Trägers mit den Restressourcen des Zielträgers verglichen werden und ein Zurücksetzen durchgeführt wird, wenn die verwendeten Ressourcen des Quellenträgers kleiner als die oder gleich den Restressourcen des Zielträgers sind; andernfalls wird das Zurücksetzen nicht durchgeführt.

12. Verfahren nach Anspruch 8, wobei die Scell, die mit dem Träger aggregiert ist und die als der Quellenträger dient, nach dem Durchführen des Zurücksetzens des zurückzusetzenden Trägers deaktiviert wird.

13. Verfahren nach Anspruch 12, wobei verwendete Ressourcen des auf dem Quellenträger zu migrierenden und aufzuteilenden Trägers vor der Migration mit den Restressourcen des Zielträgers verglichen werden und das Durchführen von Migration oder Aufteilung gemäß einem Vergleichsergebnis bestimmt wird, wobei das Durchführen von Migration oder Aufteilung gemäß dem Vergleichsergebnis auf folgende Weise bestimmt wird: Durchführen der Migration, wenn die verwendeten Ressourcen des auf dem Quellenträger zu migrierenden und aufzuteilenden Trägers kleiner als die oder gleich den Restressourcen des Zielträgers sind; andernfalls Durchführen einer Aufteilung.

14. Verfahren nach Anspruch 9, wobei
die Aufteilung die auf der Pcell geplante Ressource des Trägers auf der aktivierten Scell zur Planung ist;
oder die Aufteilung das Aktivieren einer Scell und das Aufteilen der auf der Pcell geplanten Ressource des Trägers auf der Scell vor der Aktivierung und nach der Aktivierung ist, wenn eine Restressourcensumme aller aktivierten Scells kleiner als die verwendeten Ressourcen der Pcell ist;
oder die Aufteilung Planressourcen auf der Pcell sind, die nicht auf den Scells geplant werden dürfen, wenn eine Restressourcensumme aller Scells kleiner als die verwendeten Ressourcen der Pcell ist, die von dem bestimmten Träger aggregiert wurden, nachdem alle von dem bestimmten Träger aggregierten Scells aktiviert sind.

15. Vorrichtung zum Anpassen der Zwischenträgerlast zwischen aktivierten Komponententrägern (CC) einer einzelnen Basisstation, umfassend:
eine Quellenträgerbestimmungskomponente, die zum Erfassen der Nutzungsrate des physischen Ressourcenblocks (PRB) jedes CC und Bestimmen eines Quellenträgers, dessen Last gemäß der PRB-Nutzungsrate angepasst werden muss, angeordnet ist;
eine Zielträgerbestimmungskomponente, die zum Bestimmen nicht verwendeter PRB jedes aktivierten CC und zum Bestimmen eines Zielträgers gemäß den nicht verwendeten PRB angeordnet ist;
eine Trägeranzupassungsbestimmungskomponente, die Bestimmen eines Benutzergeräts (UE), das gemäß dem Quellenträger und dem Zielträger anzupassen ist, und zum Bestimmen eines Trägers, dessen Last gemäß Ressourceninformationen jedes Trägers des anzupassenden UE angepasst werden muss, angeordnet ist; und
eine Anpassungskomponente, die zum Anpassen der Last des bestimmten Trägers gemäß dem Quellenträger und dem Zielträger angeordnet ist.

## Revendications

1. Procédé de réglage de la charge interporteuse parmi des porteuses de composants, CC, activées d'une station de base unique, comprenant :
acquérir le Bloc de ressources physiques, PRB, le taux d'utilisation de chaque CC et déterminer une porteuse source, dont une charge doit être réglée, en fonction du taux d'utilisation du PRB (S101);
déterminer des PRB inutilisés de chaque CC activée et déterminer une porteuse cible en fonction des PRB inutilisés (S102);
déterminer un Équipement d'utilisateur, UE, à régler en fonction de la porteuse source et de la porteuse cible, et déterminer un support, dont une charge doit être réglée, en fonction des informations de ressource de chaque support de l'UE à régler (S103) ; et
régler la charge de la porteuse déterminée en fonction de la porteuse source et de la porteuse cible (S104).

2. Procédé selon la revendication 1, dans lequel les informations de ressource de chaque support de l'UE sont le taux d'utilisation de PRB de chaque CC.

3. Procédé selon la revendication 1, dans lequel l'acquisition du taux d'utilisation de PRB de chaque CC et la détermination de la porteuse source, dont la charge doit être réglée, en fonction du taux d'utilisation de PRB (S101) comprend :
mesurer périodiquement le taux d'utilisation de PRB de chaque CC pour obtenir un résultat de mesure, une période de mesure pour mesurer périodiquement le taux d'utilisation de PRB de chaque CC étant inférieure à une période d'équilibrage de charge radio, RLB ;
filtrer le résultat de la mesure pour obtenir une valeur de filtrage, l'opération de filtrage effectuée sur le résultat de la mesure consistant à calculer une valeur de lissage ou une moyenne ;
comparer la valeur de filtrage à un seuil de déclenchement pour régler une charge, le seuil de déclenchement permettant de régler la charge étant inférieur à un seuil d'exécution de RLB ; et
lorsque la valeur de filtrage est supérieure au seuil de déclenchement, déterminer si une porteuse est la porteuse source, dont la charge doit être réglée.

4. Procédé selon la revendication 1, dans lequel la détermination des PRB non utilisés de chaque CC activée (S 102) consiste à multiplier les ressources disponibles de chaque CC activée par un seuil de prévention de ping-pong et à soustraire des ressources utilisées, le seuil de prévention de ping-pong étant inférieur ou égal au seuil de déclenchement permettant de régler la charge.

5. Procédé selon la revendication 1, dans lequel la détermination de la porteuse cible en fonction des PRB inutilisés (S102) est exécutée par séquençage de chaque CC activée, pour obtenir une file d'attente séquencée en fonction des PRB inutilisés, et par séparation de la porteuse cible de la file d'attente séquencée, chaque CC activée en fonction des PRB non utilisés étant exécutée par réalisation d'un séquençage de plus à moins de PRB inutilisés ou de manière aléatoire, et le filtrage de la porteuse cible à partir de la file d'attente séquencée étant exécuté par détermination d'une porteuse inférieure à une charge de la porteuse source d'un certain seuil de différence et avec la plupart des ressources de repos comme porteuse cible, le seuil de différence étant compris entre 10 % et 20 %.

6. Procédé selon la revendication 1, dans lequel la détermination de l'UE à régler en fonction de la porteuse source et de la porteuse cible (S103) comprend : la détermination d'un UE utilisant la porteuse source en tant que Cellule secondaire, Scell et l'utilisation de la porteuse cible comme Cellule primaire, Pcell, en tant qu'UE à répéter ; et la détermination d'un UE utilisant la porteuse source en tant que Pcell et l'utilisation de la porteuse cible comme Scell, en tant qu'UE à faire migrer et à diviser.

7. Procédé selon la revendication 6, dans lequel la détermination du support, dont la charge doit être réglée, en fonction des informations de ressource de chaque support de l'UE à régler (S103), comprend : la sélection d'un support qui occupe la plupart des ressources sur la porteuse source à partir de l'UE déterminé à répéter et l'UE à faire migrer et à diviser en tant que support, dont la charge doit être réglée.

8. Procédé selon la revendication 7, dans lequel le réglage de la charge du support déterminé en fonction de la porteuse source et de la porteuse cible (S104) comprend : lorsque le support, dont la charge doit être réglée, est un support à répéter,
effectuer une répétition sur le support à répéter, la répétition étant la répétition d'une ressource, programmée sur la Scell, du support vers la Pcell pour la planification.

9. Procédé selon la revendication 7, dans lequel le réglage de la charge du support déterminé en fonction de la porteuse source et de la porteuse cible (S104) comprend : lorsque le support, dont la charge doit être réglée, est un support à faire migrer et à diviser,
effectuer une migration sur le support à faire migrer et à diviser en premier et effectuer une division en cas d'échec de la migration, la migration plaçant complètement la ressource, programmée sur la Pcell, du support sur la Scell pour la planification ; ou,
effectuer une division sur le support à faire migrer et à diviser.

10. Procédé selon la revendication 7, dans lequel le réglage de la charge du support déterminé en fonction de la porteuse source et de la porteuse cible (S104) comprend : lorsque le support, dont la charge doit être réglée, comprend à la fois un support à répéter et un support à faire migrer et à diviser,
effectuer une répétition sur le support à répéter, et effectuer une migration et une division en cas d'échec de la répétition, la répétition étant la répétition d'une ressource, planifiée sur la Scell, du support vers la Pcell pour la planification, et la migration consistant à placer complètement la ressource, programmée sur la Pcell, du support sur la Scell pour la planification.

11. Procédé selon la revendication 8, dans lequel, avant d'effectuer la répétition sur le support à répéter, les ressources utilisées du support à répéter sur la porteuse source sont comparées aux ressources restantes de la porteuse cible, et lorsque les ressources utilisées de la porteuse source sont inférieures ou égales aux ressources restantes de la porteuse cible, une répétition est effectué ; sinon, la répétition n'a pas lieu.

12. Procédé selon la revendication 8, dans lequel, après que la répétition a été effectuée sur le support à répéter, la Scell agrégée avec le support et servant de porteuse source est désactivée.

13. Procédé selon la revendication 12, dans lequel les ressources utilisées du support à faire migrer et à diviser sur la porteuse source sont comparées aux ressources restantes de la porteuse cible avant la migration, et où l'on détermine s'il faut réaliser la migration ou la division en fonction d'un résultat de comparaison, la migration ou la division étant déterminée comme étant effectuée en fonction du résultat de la comparaison, de la manière suivante : exécution de la migration lorsque les ressources utilisées du support à faire migrer et à diviser sur la porteuse source sont inférieures ou égales aux ressources restantes de la porteuse cible ; sinon effectuer la division.

14. Procédé selon la revendication 9, dans lequel
la division est la ressource, programmée sur la Pcell, du support sur la Scell activée pour la planification ;
ou la division est, lorsque la somme des ressources restantes de toutes les Scells activées est inférieure aux ressources utilisées de la Pcell, l'activation d'une Scell et la division de la ressource, planifiée sur la Pcell, du support sur la Scell avant l'activation et après l'activation ;
ou la division est, lorsque la somme des ressources restantes de toutes les Scells est inférieure aux ressources utilisées de la Pcell agrégée par le support déterminé après que toutes les Scells agrégées par le support déterminé ont été activées, des ressources de planification, qui peuvent ne pas être planifiées sur les Scells , sur la Pcell.

15. Dispositif permettant de régler la charge interporteuse parmi des porteuses de composants, CC, activées d'une station de base unique, comprenant :
un composant de détermination de porteuse source, agencé pour acquérir un taux d'utilisation de Bloc de ressources physiques, PRB, de chaque CC et pour déterminer une porteuse source, dont une charge doit être réglée, en fonction du taux d'utilisation de PRB ;
un composant de détermination de porteuse cible, conçu pour déterminer les PRB non utilisés de chaque CC activée et pour déterminer une porteuse cible en fonction des PRB non utilisés ;
un composant de détermination de support à régler, conçu pour déterminer un Équipement utilisateur, UE, à régler en fonction de la porteuse source et de la porteuse cible, et pour déterminer un support, dont une charge doit être réglée, en fonction des informations de ressources de chaque porteur de l'UE à régler ; et
un composant de réglage, conçu pour régler la charge du support déterminé en fonction de la porteuse source et de la porteuse cible.
